# EUROPÄISCHE PATENTSCHRIFT

(11) **EP 0 843 853 B1**
(45) Veröffentlichungstag und Bekanntmachung des Hinweises auf die Patenterteilung: **01.09.1999**
(21) Anmeldenummer: 96922870.9
(22) Anmeldetag: 20.06.1996
(51) Int. Cl.: G06F 11/18

(54) **MICROPROZESSORSYSTEM FÜR SICHERHEITSKRITISCHE REGELUNGEN**
MICROPROCESSOR SYSTEM FOR SAFETY-CRITICAL REGULATING SYSTEMS
SYSTEME A MICROPROCESSEURS POUR DISPOSITIFS DE REGULATION CRITIQUES SUR LE PLAN SECURITE

(30) Priorität: 10.08.1995 DE 19529434
(43) Veröffentlichungstag der Anmeldung: 27.05.1998
(73) Patentinhaber: Continental Teves AG & Co. oHG, 60488 Frankfurt (DE)
(72) Erfinder: GIERS, Bernhard, D-60320 Frankfurt am Main (DE)
(86) Internationale Anmeldenummer: EP9602688
(87) Internationale Veröffentlichungsnummer: WO9706487

(56) Entgegenhaltungen:
- EP-A- 0 306 348
- EP-A- 0 372 579
- DE-A- 3 234 637
- PATENT ABSTRACTS OF JAPAN vol. 95, no. 006 & JP,A,07 160521 (NEC CORP), 23.Juni 1995,

## Beschreibung

Die Erfindung bezieht sich auf ein für sicherheitskritische Regelungssysteme vorgesehenes Microprozessorsystem, aas zwei synchron betriebene Zentraleinheiten oder CPU's enthält, die die gleichen Eingangs informationen erhalten und das gleiche Programm abarbeiten, die mit Festwertspeichern (ROM) und Schreib-Lese-Speichern (RAM) und mit Speicherplätzen für Prüfinformationen und mit Prüfinformationsgeneratoren ausgerüstet sind und die außerdem Vergleicher enthalten, die die Ausgangsinformation der Zentraleinheiten überprüfen und bei Nicht-Übereinstimmung Abschaltsignale abgeben.

Zu den sicherheitskritischen Regelungssystemen gehören beispielsweise die in die Bremsenfunktion eingreifenden Kraftfahrzeug-Regelungssysteme, von denen insbesondere die Blockierschutzregelungen oder Antiblockiersysteme (ABS) und die Antriebsschlupfregelungssysteme (ASR,TCS, etc.) in vielen Varianten auf dem Markt sind und große Bedeutung besitzen. Fahrstabilitätsregelungssysteme (FSR,ASMS), Fahrwerksregelungssysteme usw. sind ebenfalls sicherheitskritisch, weil sie auf Bremseneingriff beruhen oder weil bei ihrem Versagen auf andere Weise die Fahrstabilität des Fahrzeugs leiden kann. Es ist daher unbedingt erforderlich, die Funktionsfähigkeit solcher Systeme ständig zu überwachen, um beim Auftreten eines Fehlers die Regelung abschalten oder in einen für die Sicherheit weniger gefährlichen Zustand umschalten zu können.

Ein Beispiel für eine Schaltungsanordnung oder ein Microprozessorsystem zur Steuerung und Überwachung einer blokkiergeschützten Fahrzeugbremsanlage ist aus der DE 32 34 637 C2 bekannt. Nach dieser Schrift werden die Eingangsdaten zwei identisch programmierten Microcomputern parallel zugeführt und dort synchron verarbeitet. Die Ausgangssignale und Zwischensignale der beiden Microcomputern werden mit Hilfe von redundanten Vergleichern auf Übereinstimmung geprüft. Wenn die Signale voneinander abweichen, wird über eine ebenfalls redundant ausgelegte Schaltung eine Abschaltung der Regelung herbeigeführt. Bei dieser bekannten Schaltung dient einer der beiden Microcomputer zur Erzeugung der Bremsdrucksteuersignale, der andere zur Bildung der Prüfsignale. Bei diesem symmetrisch aufgebauten Microprozessorsystem sind also zwei vollständige Microcomputer, einschließlich der zugehörigen Festwert- und Schreib-Lese-Speicher, erforderlich.

Nach einem anderen bekannten System, nach dem die in der DE 41 37 124 Al beschriebene Schaltung aufgebaut ist, werden die Eingangsdaten ebenfalls zwei Microcomputern parallel zugeführt, von denen jedoch nur einer die vollständige, aufwendige Signalverarbeitung ausführt. Der zweite Microcomputer dient vornehmlich zur Überwachung, weshalb die Eingangssignale nach Aufbereitung, Bildung von zeitlichen Ableitungen etc. mit Hilfe vereinfachter Regelalgorithmen und vereinfachter Regelpilosophie weiterverarbeitet werden können. Die vereinfachte Datenverarbeitung reicht zur Erzeugung von Signalen aus, die durch Vergleich mit den in dem aufwendigeren Microcomputer verarbeiteten Signalen Rückschlüsse auf den ordnungsgemäßen Betrieb des Systems zulassen. Durch die Verwendung eines Prüf-Microcomputers geringerer Leistungsfähigkeit läßt sich der Herstellungsaufwand im Vergleich zu einem System mit zwei vollständigen, aufwendigen Microcomputern gleicher Leistung reduzieren.

Ein Microprozessorsystem der eingangs genannten Art ist auch bereits aus der DE 43 41 082 A1 bekannt. Es ist insbesondere an die Anwendung für das Regelungssystem einer blockiergeschützten Bremsanlage gedacht. Diese bekannte System, das auf einem einzigen Chip untergebracht werden kann, enthält zwei Zentraleinheiten bzw. CPU's, in denen die Eingangsdaten parallel verarbeitet werden. Die Festwert- und die Schreib-Lese-Speicher, an die beide Zentraleinheiten angeschlossen sind, enthalten zusätzliche Speicherplätze für Prüfinformationen und umfassen jeweils einen Generator zur Erzeugung von Prüfinformationen. Die Ausgangssignale eines der beiden Zentraleinheiten werden zur Erzeugung der Steuersignale weiterverarbeitet, während die andere, die "passive" Zentraleinheit, lediglich zur Überwachung der "aktiven" Zentraleinheit, dient. Durch den Verzicht auf die Verdoppelung der Speicher dieses Systems, unter Inkaufnahme einer relativ geringfügigen Erweiterung der Speicher zur Aufnahme der Prüfinformationen, wird eine erhebliche Verringerung des Herstellungsaufwandes ohne Einbußen an die Fehlererkennbarkeit erreicht.

Der Erfindung liegt ebenfalls die Aufgabe zugrunde, ein Microprozessorsystem so entwickeln, daß mit der äußerst hohen Wahrscheinlichkeit und Zuverlässigkeit, die für sicherheitskritische Anwendungen gefordert wird, Fehlfunktionen des Systems erkennt und signalisiert. Gleichzeitig sollte ein vergleichsweise geringer Herstellungsaufwand für ein solche Microprozessorsystem genügen.

Es hat sich herausgestellt, daß diese Aufgabe mit den im beigefügten Anspruch 1 beschriebenen System gelöst werden kann, dessen Besonderheit darin besteht, daß die Zentraleinheiten bzw. CPU's über separate Bussysteme an die Festwert- und an die Schreib-Lese-Speicher sowie an Eingabe--und an Ausgabeeinheiten angeschlossen sind und daß die Bus--systeme untereinander durch Treiberstufen verbunden bzw. gekoppelt sind, die den beiden Zentraleinheiten ein gemeinsamen Lesen und Abarbeiten der anstehenden, d.h. in den beiden Bussystemen zur Verfügung stehenden Daten einschließlich der Prüfdaten und Befehle, ermöglichen. Die auf den beiden Bussystemen anstehenden Eingans- und Ausgangsdaten der beiden Zentraleinheiten, einschließlich der Prüfdaten und Befehle werden von dem oder den Vergleichern des erfindungsgemäßen Systems auf Übereinstimmung überprüft.

In den Unteransprüchen sind noch einige vorteilhafte Ausführungsbeispiele der Erfindung beschrieben.

Das erfindungsgemäße Microprozessorsystem basiert auf der Verwendung von zwei gleichberechtigten, vollredundant betriebenen Rechnerkernen bzw. Zentraleinheiten, die gemeinsam die über zwei separate Bussysteme zugeführten Daten redundant verarbeiten. Mit Hilfe eines einfachen Hardware-Vergleichers, dem aus Sicherheitsgründen ein zweiter Vergleicher parallelgeschaltet ist, werden dann die Eingangs- und die Ausgangssignale beider Zentraleinheiten auf Übereinstimmung verglichen. Die Speicher des erfindungsgemäßen Systems sind nur einmal vorhanden; es sind lediglich zusätzliche Speicherplätze für Prüfdaten, die beispielsweise in Form von Paritätsbits vorliegen, vorgesehen.

Nach einem bevorzugten Ausführungsbeispiel ist an einem der beiden Bussysteme ein vollständiger Microprozessor bestehend aus Zentraleinheit, Festwert- und Schreib-Lese-Speicher, Eingangs- und Ausgangsstufe, angeschlossen, während das zweite Bussystem anstelle der Festwert- und Schreib-Lese-Speicher nur mit entsprechenden Speicherplätzen für Prüfdaten direkt verbunden ist. Die beide Bussysteme koppelnden Treiberstufen ermöglichen jedoch beiden Zentraleinheiten das Lesen aller benötigten, von den Nutzdaten-Speichern, den Prüfdatenspeichern und den Eingangsstufen gelieferten Daten. auf diese Weise entsteht eine besonders einfache Struktur des erfindungsgemäßen Microprozessorsystems, die das Unterbringen aller Komponenten auf einem einzigen Chip begünstigt.

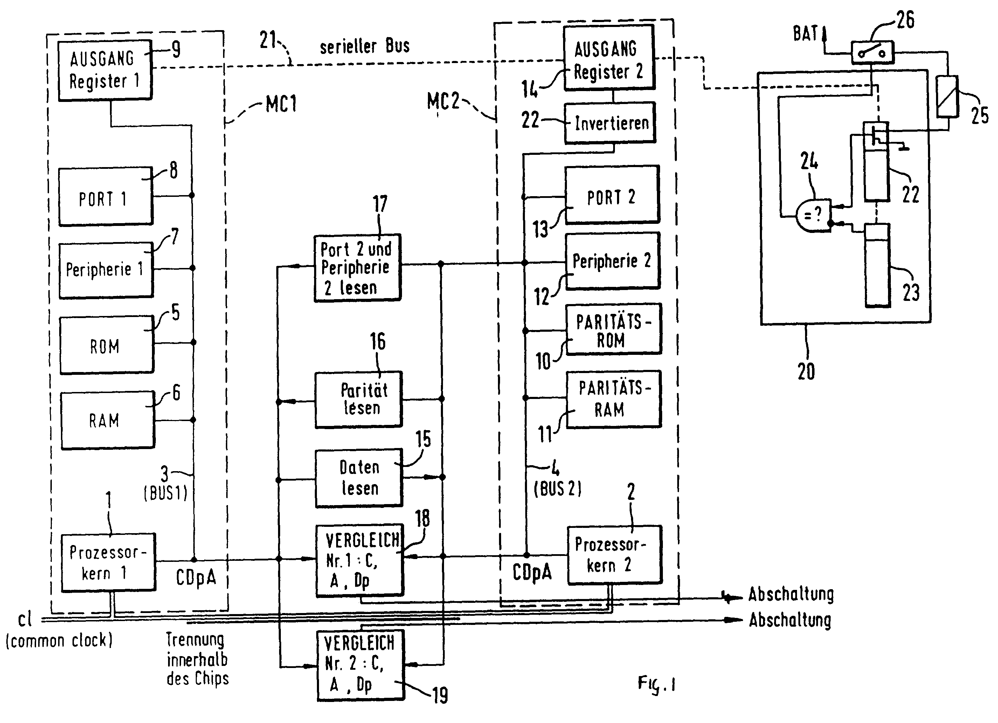

Weitere Merkmale, Vorteile und Anwendungsmöglichkeiten gehen aus der folgenden Beschreibung eines Ausführungsbeispiels anhand der beigefügten Abbildung hervor, die in schematisch vereinfachter Darstellung die wichtigsten Komponenten eines Microprozessorsystems nach der Erfindung wiedergibt.

Zur Erläuterung des prinzipiellen Aufbaus und der Wirkungsweise eines Microprozessorsystems nach der Erfindung dient die beigefügte Abbildung. Es handelt sich in diesem Beispiel und ein Ein-Chip-Microcomputersystem, das zwei synchron betriebene Zentraleinheiten 1,2, die auch als Rechner- oder Prozessorkerne oder als CPU's bezeichnet werden, separate Bussysteme 3,4 (Bus 1, Bus 2) enthält. Der für beide Zentraleinheiten 1,2 gemeinsame Takt wird über den Anschluß cl (common clock) zugeführt. Die Zentraleinheit 1 ist durch einen Festwertspeicher 5 (ROM), durch einen Schreib-Lese-Speicher 6 (RAM) und durch Eingabe- oder Eingangsstufen 7,8 (Peripherie 1, Port 1) und durch eine Ausgabe- oder Ausgangsstufe 9 zu einem vollständigen Microcomputer MC1 ergänzt. An das zweite Bussystem 4 (Bus 2) sind dagegen außer der Zentraleinheit 2 lediglich Prüfdaten-Speicher 10,11 und außerdem Eingabe- oder Eingangsstufen 12,13 und eine Ausgabestufe 14 angeschlossen. Die Prüfdaten-Speicherplätze für die Daten im Festspeicher 5 sind in dem Speicher 10, die Prüfdaten für den Schreib-Lese-Speicher 6 im Speicher 11 untergebracht. Das Ganze bildet einen "abgemagerten" Microcomputer MC2.

Die beiden Bussysteme 3,4 (Bus 1, Bus 2) sind außerdem, was erfindungswesentlich ist, durch Treiberstufen 15,16,17 gekoppelt, die es ermöglichen, daß die ankommenden Daten von den beiden Zentraleinheiten 1,2 gemeinsam gelesen werden können. Die Stufen 15 bis 17 sind Treiber (oder "buffer" mit Enable-Funktion). Die Übertragungsrichtungen der Treiber 15 bis 17 sind durch einen Pfeil symbolisch dargestellt; der Treiber 15 dient zur Übertragung der Daten, die sich auf dem Bussystem 3 (Bus 1) befinden, zur Zentraleinheit 2, der Treiber 16 zur Übertragung der Prüfinformationen oder -daten aus den Prüfdatenspeichern 10,11 zur Zentraleinheit 1 und der Treiber 17 zur Übertragung der Daten von den Eingangsstufen 12,13 des zweiten Bussystems 4 (Bus 2) zur Zentraleinheit 1.

Die Bussysteme 3,4 umfassen jeweils einen Steuerbus "C", einen Datenbus "D" und eine Adress-Bus "A". Auf dem Datenbus befinden sich auch die Prüfdaten "p". Die Eingangs- und die Ausgangsdaten der Zentraleinheiten, die in einem Hardware-Vergleicher 18 und in einem gleichartigen, auf dem gleichen Chip, örtlich getrennt angeordneten Vergleicher 19 auf Übereinstimmung geprüft werden, sind daher in mit "CDpA" bezeichnet.

Im Gegensatz zu bekannten Systemen ist bei dem erfindungsgemäßen Micropozessorsystem keine Unterscheidung in einen aktiven und in einen passiven Rechner möglich. Die beiden Rechnerkerne oder Zentraleinheiten 1,2 sind vielmehr gleichberechtigt. Sie verarbeiten vollredundant die gemeinsam gelesenen Daten, zu denen auch die Prüf- oder Redundanzinformationen und die Steuerbefehle gehören. Die Eingangs- und die Ausgangssignale der Rechner 1,2 werden auf Übereinstimmung geprüft und über die zugehörigen Bussysteme 3,4 und die Ausgabeeinheiten 9,14 einer symbolisch dargestellten Ventilansteuerung 20 zugeleitet. Diese funktioniert wie folgt:

Beide Zentraleinheiten 1,2 liefern über die Bussysteme 3,4 identische Ausgangssignale zu den Ausgabeeinheiten 9,14. Im Weg zu einer der beiden Ausgabeeinheiten, hier im Weg zur Ausgabeeinheit 14, ist ein Inverter 22 eingefügt. Über einen seriellen Bus 21 ist die Ventilansteuerung 20 angeschlossen. Es sind in diesem Ausführungsbeispiel zwei Ausgangsschieberegister 22,23 vorgesehen, wobei dem zweiten Schieberegister 22 die Daten invertiert zugeführt werden, um Kurzschlüsse zwischen den Rechnern auszuschließen. Über ein UND-Gatter 24 mit einem invertierenden Eingang werden die in den Schieberegistern 22,23 enthaltenen Daten auf Übereinstimmung verglichen. Ist die UND-Bedingung, die das Gatter 24 überwacht, nicht erfüllt, wird ein Schalter 26 in der Stromversorgung für die angesteuerten Ventile oder Aktuatoren 25 geöffnet und dadurch, weil ein Fehler vorliegt, die Aktuatorbetätigung abgeschaltet.

Die Schieberegister 22,23 sind als Bestandteile der Ausgangsstufen 9 bzw. 14 anzusehen. Es wird also unabhängig von den Vergleichern 18,19 nochmals, in diesem Fall extern, die Übereinstimmung der Ausgangssignale überwacht. Im Fehlerfall wird somit unabhängig von der Funktion der Zentraleinheiten 1,2 die Ansteuerung der Ventile 25 unterbunden.

Erfindungsgemäß wird also die Zentraleinheit, wozu die Gesamtheit des Rechenwerkes und der Ablaufsteuerung gehört, zur Absicherung der Rechenergebnisse und der richtigen Abarbeitung der Programme doppelt ausgeführt. Der Datenbus wird jeweils um einen Generator für die Prüfdaten bzw. für Redundanzinformation, z.B. für Paritätsbits, erweitert. Die Ausgangssignale der beiden Zentraleinheiten, werden zur Überprüfung an die Hardware-Vergleicher (18,19) geleitet. Diese überprüfen die Identität der Signale, einschließlich der Prüfsignale, und bewirken eine System-ABSCHALTUNG, wenn die synchrone Abarbeitung der Programme durch die redundanten Zentraleinheiten voneinander abweichende Resultate ergeben.

Die Ausgangssignale beider Zentraleinheiten sind gleichberechtigt, d.h. eine Ansteuerung von Speichereinheiten (RAM,ROM) oder der "Peripherie" kann durch eine der beiden Zentraleinheiten erfolgen.

Über die Eingabeeinheiten 7,12, die in der Abbildung als Peripherie 1 und Peripherie 2 bezeichnet sind, können bei einem Kraftfahrzeugregelungssystem z. B. die Radsensoren, deren Ausgangssignale die wichtigsten Eingangsgrößen des Regelungssystems sind, angeschlossen werden. Dabei ist es möglich, die Sensorsignal-Zuführung wie dargestellt, auf die beiden Bussysteme 3,4 zu verteilen. Die Signalzuführung kann natürlich auch redundant, nämlich durch Anschluß aller Sensorsignale an beide Bussysteme 3,4, ausgebildet werden.

Entsprechendes gilt für die über die Eingabestufen 8,13 (Port 1, Port 2) zugeführten Informationen. Bei einem geregelten Bremsensystem werden über diese Eingabestufen beispielsweise der Bremslichtschalter und andere Sensoren angeschlossen.

Ein wichtiges Merkmal der Erfindung ist darin zu sehen, daß - trotz der weitgehenden Redundanz und "Absicherung" des Datenverarbeitungsprozesses - der Speicherwaufwand relativ klein gehalten wird. Die Festwert- und die Schreib-Lese-Speicher sind nämlich, wie zuvor erläutert, lediglich für einen der beiden Microcomputer (MC1) vorgesehen, während an den zweiten Microcomputer (MC2) lediglich Speicherplätze (10,11) für Prüfdaten besitzt. Die Treiberstufen 15,16,17 mit denen beide Bussysteme gekoppelt sind, stellen sicher, daß dennoch im Datenverarbeitungsprozeß beiden Zentraleinheiten die gespeicherten Nutzdaten und Prüfdaten zur Verfügung stehen.

Abweichend von dem dargestellten Ausführungsbeispiel können die Speicherplätze der Speicher 5,6,10,11 auch völlig anders auf die beiden Bussysteme 3,4 bzw. Microcomputer MC1, MC2 verteilt werden. Der insgesamt erforderliche Speicherplatz wird dadurch nicht erhöht.

Zur Fehlererkennung beim Lesen und Schreiben der gespeicherten und abzuspeichernden Daten werden die Prüfdaten bzw. Paritätsbits herangezogen. Zu jeder Speicherzelle des Festwert- und des Schreib-Lese-Speichers ist unter der gleichen Adresse in den Speichern 10,11 des zweiten Microprozessors MC2, der nur Speicherplätze für die Prüfdaten enthält, die Redundanzinformation abgelegt. Für den Festwertspeicher wurde die Prüf- bzw. Redundanzinformation bereits während der Programmierung festgelegt. Bei den Schreib-Lese-Speichern wird diese Prüf- bzw. Redundanzinformation beim Schreibvorgang generiert. Analog zu dem Lesevorgang der Daten und Befehle wird die Prüf- bzw. Redundanzinformation über die Treiberstufe 16, die die beiden Bussysteme 3,4 koppelt, übertragen. Beim schreibenden Zugriff werden demnach die zu schreibenden Daten um eine redundante Information erweitert, die mit den Daten gespeichert werden. Bei einem lesenden Zugriff werden diese Daten und die zurückgelesene redundante Information dann durch die Vergleicher 18,19 auf Gültigkeit überprüft.

Sollen aus Sicherheitsgründen Eingangsdaten redundant erfaßt und verarbeitet werden, werden die Eingangs- bzw. Eingabestufen (7,8,12,13) doppelt ausgelegt. Diese Stufen können jeweils zum Teil im Adreßraum der einen und der anderen Zentraleinheit angeordnet werden. Daher ist eine Entkopplung der Peripherie-Elemente wie bei einem symmetrischen Microprozessorsystem gegeben.

Die Ausgangssignale, insbesondere die Ansteuersignale für die Ventilansteuerung 20, die doppelt ausgelegte Ausgabestufen enthalten, können ebenfalls jeweils zum Teil im Adreßraum der einen oder der anderen Zentraleinheit angeordnet werden. Folglich ist eine Entkopplung von Ausgangs-Peripherie-Elementen wie bei einem vollsymmetrischen Konzept gegeben.

Um Fehler bei der Übertragung von Informationen über das Bussystem zu erkennen, ist dieses redundant in Form der Bussysteme 3 und 4 (Bus 1, Bus 4) ausgelegt. Die von den beiden Zentraleinheiten 1,2 abgegebenen, auf den Bussystemen anstehenden Signale werden durch die Vergleicher 18,19 auf Übereinstimmung überwacht.

Werden zur Erzeugung der Prüfdaten oder Redundanzdaten Paritätsgeneratoren verwendet, sind bei dem erfindungsgemäßen System zwei Generatoren erforderlich, die z.B. in den Zentraleinheiten 1,2 oder in den Vergleichern 18,19 untergebracht werden können. Bei einem schreibenden Zugriff auf die zusätzlichen Speicherplätze, die für den Schreib-Lese-Speicher zur Verfügung stehen (Speicher 11), wird die mit Hilfe des Redundanz generators in der Zentraleinheit 2 erzeugte Information gespeichert. Bei lesendem Zugriff auf die zusätzlichen Speicherplätze für die Prüfdaten im Festwert- oder Schreib-Lese-Speicher wird die von dem Redundanzgenerator erzeugte Information mit der gelesenen Redundanzinformation auf Übereinstimmung verglichen.

Geeignete Redundanzgeneratoren lassen sich z.B. in bekannter Weise mit Hilfe von Exklusiv-ODER-Gattern realisieren.

## Patentansprüche

1. Microprozessorsystem für sicherheitskritische Regelungen, mit zwei synchron betriebenen Zentraleinheiten oder CPU's, die die gleichen Eingangsinformationen erhalten und das gleiche Programm abarbeiten, mit Festwertspeichern (ROM) und Schreib-Lese-Speichern (RAM), mit Speicherplätzen für Prüfdaten und mit Prüfdatengeneratoren, mit Vergleichern, die die Ausgangsdaten bzw. Ausgangssignale der Zentraleinheiten überprüfen und bei Nicht-Übereinstimmung Abschaltsignale abgeben, dadurch **gekennzeichnet**, daß die Zentraleinheiten bzw. CPU's (1,2) über separate Bussysteme (3,4) an die Festwert- und an die Schreib-Lese-Speicher (5,6,10,11) sowie an Eingabe- und Ausgabeeinheiten (7,8,12,13;9,14) angeschlossen sind und daß die Bussysteme (3,4) untereinander durch Treiberstufen (15,16,17) verbunden sind, die den beiden Zentraleinheiten (1,2) ein gemeinsames Lesen und Abarbeiten der anstehenden, d.h. in den beiden Bussystemen (3,4) zur Verfügung stehenden Daten, einschließlich der Prüfdaten und Befehle, ermöglichen.

2. Microprozessorsystem nach Anspruch 1, dadurch **gekennzeichnet**, daß die Vergleicher (18,19) die auf den beiden Bussystemen (3,4) anstehenden Eingangs- und Augangsdaten der beiden Zentraleinheiten (1,2), einschließlich der Prüfdaten und Befehle auf Übereinstimmung vergleichen.

3. Microprozessorsystem nach Anspruch 1 oder 2, dadurch **gekennzeichnet**, daß die Speicherplätze der Festwertspeicher (5) und der Schreib-Lese-Speicher (6), einschließlich der Speicherplätze für die Prüfdaten (10,11), auf die an die beiden Bussysteme (3,4) angeschlossenen Speicher (5,6,10,11) verteilt sind.

4. Microprozessorsystem nach Anspruch 3, dadurch **gekennzeichnet**, daß an einem Bussystem (3) die Festwert- und die Schreib-Lese-Speicher (5,6) und an dem zweiten Bussystem (4) die zugehörigen Prüfwertspeicher (10,11) angeschlossen sind.

5. Microprozessorsystem nach einem oder mehreren der Ansprüche 1 bis 4, dadurch **gekennzeichnet**, daß zumindest die beiden Zentraleinheiten (1,2), die Speicher (5,6,10,11) und die Treiberstufen (15,16,17), die den Zentraleinheiten ein gemeinsames Lesen der anstehenden Daten ermöglichen, und ein Vergleicher (18,19) auf einem einzigen Chip angeordnet sind.

6. Microprozessorsystem nach einem oder mehreren der Ansprüche 1 bis 5, dadurch **gekennzeichnet**, daß die beiden Bussysteme (3,4) jeweils einen Daten- und Prüfinformations-Bus (Dp), einen Adreßbus (A) und einen Steuerbus (C) umfassen.

7. Microprozessorsystem nach einem oder mehreren der Ansprüche 1 bis 6, dadurch **gekennzeichnet**, daß die Signale der beiden Zentraleinheiten (1,2), nämlich die Signale auf den beiden Bussystemen (3,4), zwei parallel geschalteten Hardware-Vergleichern (18,19) zugeführt werden, die innerhalb eines Chips, jedoch räumlich getrennt, angeordnet sind.

8. Microprozessorsystem nach einem oder mehreren der Ansprüchen 1 bis 7, dadurch **gekennzeichnet**, daß an die Systeme (3,4) mit einem externen Verleicher (22,23,24) Aktuatoren oder Ventile angeschlossen sind.

9. Microprozessorsystem nach Anspruch 8, dadurch **gekennzeichnet**, daß der externe Vergleicher (2) Ausgangsschieberegister (22,23) aufweist, von denen eines (23) die Ausgangsdaten invertiert erhält, daß die den beiden Schieberegsiter (22,23) enthaltenen Daten über ein UND-Gatter (24), das einen invertierten Eingang besitzt, verglichen werden und daß das Ausangssignal des UNDF-Gatters (24) einen Schalter (26) in der Stromversorgung für die Aktuatoren oder Ventile (25) geschlossen hält.

## Claims

1. Microprocessor system for safety-critical control systems, including two synchronously operated central units or CPUs which receive the same input data and execute the same program, read-only memories (ROM) and random-access memories (RAM), memory locations for test data, test data generators, and comparators which check the output data or output signals of the central units and issue disconnecting signals in the event of non-correlation,
**characterized** in that the central units or CPU's (1, 2) are connected to the read-only memories and the random-access memories (5, 6, 10, 11) and to input and output units (7, 8, 12, 13; 9, 14) by way of separate bus systems (3, 4), and in that the bus systems (3, 4) are connected one to the other by driver stages (15, 16, 17) which enable both central units (1, 2) to jointly read and process the data, including the test data and commands, present or available in the two bus systems (3, 4).

2. Microprocessor system as claimed in claim 1,
**characterized** in that the comparators (18, 19) compare the input and output data of the two central units (1, 2), including the test data and commands, present on the two bus systems (3, 4), for correlation.

3. Microprocessor system as claimed in claim 1 or claim 2,
**characterized** in that the memory locations of the read-only memories (5) and the random-access memories (6), including the memory locations for the test data (10, 11), are distributed on the memories (5, 6, 10, 11) connected to the two bus systems (3, 4).

4. Microprocessor system as claimed in claim 3,
**characterized** in that the read-only and the random-access memories (5, 6) are connected to one bus system (3), and the associated test value memories (10, 11) are connected to the second bus system (4).

5. Microprocessor system as claimed in any one or more of claims 1 to 4,
**characterized** in that at least the two central units (1, 2), the memories (5, 6, 10, 11), and the driver stages (15, 16, 17) which enable the central units to jointly read the data present, and a comparator (18, 19) are arranged on one single chip.

6. Microprocessor system as claimed in any one or more of claims 1 to 5,
**characterized** in that each of the two bus systems (3, 4) comprises a data and test information bus (Dp), an address bus (A), and a control bus (C).

7. Microprocessor system as claimed in any one or more of claims 1 to 6,
**characterized** in that the signals of the two central units (1, 2), i.e., the signals on the two bus systems (3, 4), are sent to two parallel connected hardware comparators (18, 19) which are arranged within one chip, however, spatially separated from each other.

8. Microprocessor system as claimed in any one or more of claims 1 to 7,
**characterized** in that actuators or valves are connected to the systems (3, 4) with an external comparator (22, 23, 24).

9. Microprocessor system as claimed in claim 8,
**characterized** in that the external comparator (2) has output shift registers (22, 23), of which one register (23) receives the output data in an inverted manner, in that the data stored in the two shift registers (22, 23) are compared by way of an AND-gate (24) which has an inverted input, and in that the output signal of the AND-gate (24) keeps a switch (26) closed in the power supply for the actuators or valves (25).

## Revendications

1. Système à microprocesseurs pour des régulations critiques du point de vue de la sécurité, comportant deux unités centrales ou unités centrales de traitement, qui fonctionnent de façon synchrone et reçoivent les mêmes informations d'entrée et traitent le même programme, et comportant des mémoires mortes (ROM) et des mémoires d'écriture et de lecture (RAM), des emplacements de mémoire pour des données de contrôle et des générateurs de données de contrôle, des comparateurs, qui contrôlent les données de sortie ou les signaux de sortie des unités centrales et, en cas de non-coïncidence, délivrent des signaux de débranchement, caractérisé en ce que les unités centrales ou les unités CPU (1,2) sont raccordées au moyen de systèmes de bus séparés (3,4) à la mémoire morte et à la mémoire d'écriture et de lecture (5,6,10,11), ainsi qu'à des unités d'entrée et de sortie (7,8,12,13;9,14) et que les systèmes de bus (3,4) sont reliés entre eux par l'intermédiaire d'étages d'attaque (15,16,17), qui permettent une lecture et un traitement communs des données présentes, c'est-à-dire disponibles dans les deux systèmes de bus (3,4), y compris les données de contrôle et les instructions.

2. Système à microprocesseurs selon la revendication 1, caractérisé en ce que les comparateurs (18,19) comparent les données d'entrée et de sortie, qui sont présentes dans les deux systèmes de bus (3,4), des deux unités centrales (1,2), y compris les données de contrôle et les instructions, pour déterminer si elles coïncident.

3. Système à microprocesseurs selon la revendication 1 ou 2, caractérisé en ce que les emplacements de la mémoire morte (5) et de la mémoire d'écriture et de lecture (6), y compris les emplacements de mémoire pour les données de contrôle (10,11), sont répartis entre les mémoires (5,6,10,11) raccordées aux deux systèmes de bus (3,4).

4. Système à microprocesseurs selon la revendication 3, caractérisé en ce que la mémoire morte et la mémoire d'écriture et de lecture (5,6) sont raccordées à un système de bus (3) et les mémoires associées de valeurs de contrôle (10,11) sont raccordées au deuxième système de bus (4).

5. Système à microprocesseurs selon l'une ou plusieurs des revendications 1 à 4, caractérisé en ce qu'au moins les deux unités centrales (1,2), les mémoires (5,6, 10,11) et les étages d'attaque (15,16,17), qui permettent aux unités centrales une lecture commune des données présentes, et un comparateur (18,19) sont disposés sur une plaquette unique.

6. Système à microprocesseurs selon une ou plusieurs des revendications 1 à 5, caractérisé en ce que les deux systèmes de bus (3,4) comprennent chacun un bus (Dp) de transmission de données d'informations et de contrôle, un bus de transmission d'adresses (A) et un bus de commande (c).

7. Système à microprocesseurs selon une ou plusieurs des revendications 1 à 6, caractérisé en ce que les signaux des deux unités centrales (1,2), à savoir les signaux présents dans les deux systèmes de bus (3,4), sont envoyés à deux comparateurs matériels (18, 19), branchés en parallèle, qui sont disposés à l'intérieur d'une plaquette, tout en étant séparés spatialement.

8. Système à microprocesseurs selon une ou plusieurs des revendications 1 à 7, caractérisé en ce que des actionneurs ou des valves sont raccordés aux systèmes (3,4) comportant un comparateur externe (22,23,24).

9. Système à microprocesseurs selon la revendication 8, caractérisé en ce que le comparateur externe (2) comporte des registres à décalage de sortie (22,23), dont l'un (23) reçoit les données de sortie inversées, que les données contenues dans les deux registres à décalage (22,23) sont comparées par l'intermédiaire d'une porte ET (24), qui possède une entrée inversée, et que le signal de sortie de la porte ET (24) maintient fermé un interrupteur (26) situé dans le système d'alimentation en courant pour les actionneurs ou les valves (25).
